# EUROPÄISCHE PATENTSCHRIFT

(11) **EP 0 831 115 B1**
(45) Veröffentlichungstag und Bekanntmachung des Hinweises auf die Patenterteilung: **08.05.2002**
(21) Anmeldenummer: 97115793.8
(22) Anmeldetag: 11.09.1997
(51) Int. Cl.: C08J 9/18

(54) **Verfahren zur Herstellung von expandierten Polyolefinpartikeln**
Process for preparing expanded polyolefin particles
Procédé de préparation de particules expansées de polyoléfine

(30) Priorität: 18.09.1996 DE 19638039
(43) Veröffentlichungstag der Anmeldung: 25.03.1998
(73) Patentinhaber: BASF AKTIENGESELLSCHAFT, 67056 Ludwigshafen (DE)
(72) Erfinder: Hahn, Klaus, Dr., 67281 Kirchheim (DE); Beuermann, Ilka Renate, Dr., 67059 Ludwigshafen (DE); de Grave, Isidoor, Dr., 67157 Wachenheim (DE); Kögel, Wolfram, 68309 Mannheim (DE)

(56) Entgegenhaltungen:
- EP-A- 0 164 855
- EP-A- 0 417 405
- DE-B- 1 260 134
- US-A- 5 244 927

## Beschreibung

Die Erfindung betrifft ein Verfahren zur Herstellung von expandierten Polypropylen(EPP)-Partikeln durch Imprägnieren von Polypropylen-Granulat mit einem flüchtigen Treibmittel in Suspension unter Druck bei erhöhter Temperatur.

Das genannte Verfahren ist an sich bekannt und wird in großtechnischem Maßstab betrieben. Nach EP-A 53 333 und EP-A 123 144 werden als Treibmittel organische Verbindungen, wie Halogenkohlenwasserstoffe, z.B. Dichlordifluormethan, oder Kohlenwasserstoffe, z.B. Butan eingesetzt. Solche organischen Treibmittel sind jedoch aus verschiedenen Gründen, z.B. wegen ihrer geringen Umweltverträglichkeit, Brennbarkeit oder Toxizität nicht unbedenklich. Darüberhinaus ist es schwierig, mit Kohlenwasserstoff-Treibmitteln EPP-Schaumstoffpartikel hoher Dichte reproduzierbar herzustellen.

In EP-A 113 903 und EP-A 168 954 wird deshalb Kohlendioxid als Treibmittel vorgeschlagen. Mit CO₂ muß jedoch bei verhältnismäßig hohem Druck gearbeitet werden, was einen großen apparativen Aufwand erfordert.

Der Erfindung lag also die Aufgabe zugrunde, ein alternatives flüchtiges Treibmittel für die EPP-Herstellung bereitzustellen und bei niedrigen Drücken EPP-Partikel mit hoher Schüttdichte herzustellen.

Es wurde gefunden, daß Ethanol in Kombination mit anorganischen Gasen ein geeignetes Treibmittel ist.

Gegenstand der Erfindung ist demzufolge ein Verfahren zur Herstellung von expandierten Polypropylen(EPP)-Partikeln mit einer Schüttdichte von mindestens 100 g/l durch Imprägnieren von Polypropylen-Granulat in wäßriger Suspension in Gegenwart eines wasserunlöslichen Suspendierhilfsmittels bei erhöhter Temperatur und unter einem Druck von 8·10⁵ bis 35·10⁵ Pa und anschließendem Entspannen, wobei als Treibmittel 0,1 bis 50 Gew.-%, bezogen auf das Polypropylen-Granulat, Ethanol in Kombination mit 0,5 bis 3 Gew.-%, bezogen auf das Polypropylengranulat Stickstoff, Luft oder Kohlendioxid eingesetzt werden, und das Gewichtsverhältnis Wasser zu Ethanol größer als 2 : 1 beträgt.

In verschiedenen Druckschriften, z.B. EP-A 429 091 und EP-A 646 619 wird die Imprägnierung von Polypropylengranulat mit organischen Treibmitteln, die nicht mit Wasser mischbar sind, in einem Dispergiermedium beschrieben. Das Dispergiermedium ist immer bevorzugt Wasser, daneben sind aber auch z.B. Methanol und Ethanol genannt.

In der EP-A 164 855 ist ein Verfahren zur Herstellung von EPO-Partikeln beschrieben, bei dem als Treibmittel Stickstoff, gegebenenfalls im Gemisch mit Imprägnierhilfsmitteln, wie Kohlenwasserstoffen, Ethern oder Ketonen, eingesetzt wird. Es wird erwähnt, daß außer dem bevorzugten Suspensionsmedium Wasser auch Mischungen mit anderen Flüssigkeiten, z.B. Alkoholen, verwendet werden können. Da bei dem beschriebenen Verfahren verhältnismäßig hohe Schäumraten, d.h. niedrige Schüttdichten angestrebt werden, wird bei hohen Drücken (in den Beispielen mindestens 40·10⁵ Pa) gearbeitet.

Polypropylene im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.
d) Mischung aus den unter a) bis c) genannten Polypropylenen (gegebenenfalls nach Zugabe von Phasenvermittlern).

Der Kristallitschmelzpunkt (DSC-Maximum) der unter a) bis d) aufgelisteten Polypropylene liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp) nach DIN 53 735 zwischen 0,1 und 100 g/10 min.

Bei der Herstellung der EPP-Partikel geht man von Polypropylengranulat aus, welches vorzugsweise mittlere Durchmesser von 0,2 bis 10, insbesondere 0,5 bis 5 mm aufweist. In einem Rührreaktor werden 100 Gew.-Teile dieses Granulats in 100 bis 500 Gew.-Teilen Wasser, mit 0,1 bis 10 Gew.-Teilen, vorzugsweise 1 bis 7 Gew.-Teilen eines wasserunlöslichen Suspendierhilfsmittels dispergiert. Beispiele für geeignete Suspendierhilfsmittel sind Tricalciumphosphat, Calciumcarbonat, Kieselerde und Aluminiumoxid.

Das erfindungsgemäße Treibmittel ist eine Kombination von Ethanol mit Stickstoff, Luft oder CO₂. Ethanol wird in Mengen von 0,1 bis 50, vorzugsweise 1 bis 40 und insbesondere 3 bis 30 Gew.-%, bezogen auf Polypropylen-Granulat, eingesetzt. Das Gewichtsverhältnis Wasser zu Ethanol ist dabei größer als 2 : 1.

Es hat sich gezeigt, daß die Verwendung von Ethanol als Treibmittel zu einem wesentlich gleichmäßigeren Aufschäumgrad der EPP-Partikel führt als wenn man herkömmliche, mit Wasser nicht mischbare organische Treibmittel einsetzt. Außerdem bewirkt der Zusatz von Ethanol, daß die Imprägniertemperatur herabgesetzt werden kann, wodurch die Gefahr des Verklebens der Schaumpartikel vermindert wird. Die Suspension enthält daher als Treibmittel ausschließlich Ethanol zusammen mit den anorganischen Gasen.

Bei dem erfindungsgemäßen Verfahren werden als Cotreibmittel Stickstoff, Luft, oder Kohlendioxid verwendet.
Das Cotreibmittel wird in Mengen von 0,5 bis 3,0 Gew.-Teilen, insbesondere 1,0 bis 2,5 Gew.-Teilen, bezogen auf 100 Gew.-Teile Polypropylen-Granulat, eingesetzt.

Die Treibmittelzugabe kann vor oder während des Aufheizens des Reaktorinhalts auf die Entspannungstemperatur erfolgen. Diese sollte 20°C unter bis 20°C über, vorzugsweise 2 bis 10°C über dem Kristallitschmelzpunkt des Polypropylens liegen. Bevorzugt arbeitet man bei 110°C bis 180°C, insbesondere bei 130°C bis 160°C.

Je nach Menge und Art des Treibmittels sowie nach der Höhe der Temperatur stellt sich im Reaktor ein Druck ein, der mindestens 8·10⁵ Pa bar beträgt und 35·10⁵ Pa bar nicht übersteigt. Im Falle der bevorzugten Treibmittelmischung Ethanol plus Stickstoff liegt er zwischen 10·10⁵ und 25·10⁵ Pa.

Durch die Wahl der Imprägniertemperatur und des Treibmittels kann die Schüttdichte der entstandenen EPP-Partikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5·10⁵ bis 5·10⁵ Pa herrscht.

Beim Entspannen des Reaktors erfolgt eine Expansion des treibmittelhaltigen Polypropylen-Granulats und es entstehen EPP-Partikel mit einem mittleren Durchmesser von 1 bis 20 mm.

Bei ein bevorzugten Ausführungsform werden die EPP-Partikel und das Suspendierhilfsmittel von der wäßrigen Lösung, welche die Hauptmenge des Treibmittels gelöst enthält, abgetrennt, und die verbleibende wäßrige Lösung wird als Suspensionsmedium für einen weiteren Imprägnieransatz verwendet.

Das erfindungsgemäße Verfahren ist besonders geeignet zur Herstellung von EPP-Partikeln mit verhältnismäßig hohen Schüttdichten von mindestens 100 g/l, vorzugsweise zwischen 100 und 150 g/l. Die EPP-Partikel sind überwiegend geschlossenzellig und besitzen eine Zellzahl von 1 bis 5000 Zellen/mm², vorzugsweise 2 bis 3000 Zellen/mm², insbesondere 10 bis 1500 Zellen/mm².

Die EPP-Partikel können nach üblichen Verfahren mit Wasserdampf oder Heißluft zu Schaumstoff-Formteilen verschweißt werden, welche in der Automobil-, Verpackungs- und Freizeitindustrie Anwendung finden.

### Beispiel 1

In einem Rührreaktor werden 100 Gew.-Teile eines Propylen-Ethylen-Randomcopolymeren mit einem Ethylengehalt von ca. 2 Gew.-% und 4 Gew.-Teile Tricalciumphosphat in 180 Gew.-Teilen 45°C Wasser dispergiert. Dann werden 20 Gew.-Teile Ethanol zugegeben und der Reaktor wird verschlossen. Danach werden 10·10⁵ Pa (0,75 Gew.-Teile) Stickstoff aufgepreßt. Der Reaktorinhalt wird auf eine Temperatur von 150°C aufgeheizt. Dabei steigt der Druck auf ca. 20·10⁵ Pa an. Dann wird der Inhalt des Reaktors durch ein Ventil am Boden in einen Zwischenbehälter entspannt, in dem sich ein Druck von 1,7·10⁵ Pa aufbaut. Durch Nachpressen von Stickstoff wird der Druck im Imprägnierbehälter während der Entspannung bei 25·10⁵ Pa konstant gehalten. Nach der Entfernung des Tricalciumphosphats und Trocknung haben die erhaltenen EPP-Partikel eine Schüttdichte von 120 g/l.

### Beispiel 2

In einem Rührreaktor werden 100 Gew.-Teile eines Propylen-Ethylen-Randomcopolymeren mit einem Ethylengehalt von ca. 2 Gew.-% und 4 Gew.-Teile Tricalciumphosphat in 233 Gew.-Teilen 45°C Wasser dispergiert. Dann werden 22 Gew.-Teile Ethanol zugegeben und der Reaktor wird verschlossen. Danach werden 10·10⁵ Pa (0,75 Gew.-Teile) Stickstoff aufgepreßt. Der Reaktorinhalt wird auf eine Temperatur von 151°C aufgeheizt. Dabei steigt der Druck auf ca. 16·10⁵ Pa an. Dann wird der Inhalt des Reaktors durch ein Ventil am Boden in einen Zwischenbehälter entspannt, in dem sich ein Druck von 1,7·10⁵ Pa aufbaut. Durch Nachpressen von Stickstoff wird der Druck im Imprägnierbehälter während der Entspannung bei 25·10⁵ Pa konstant gehalten. Nach der Entfernung des Tricalciumphosphats und Trocknung haben die erhaltenen EPP-Partikel eine Schüttdichte von 104 g/l.

### Beispiel 3

In einem Rührreaktor werden 100 Gew.-Teile eines Propylen-Ethylen-Randomcopolymeren mit einem Ethylengehalt von ca. 2 Gew.-% und 4 Gew.-Teile Tricalciumphosphat in 267 Gew.-Teilen 45°C Wasser dispergiert. Dann werden 3 Gew.-Teile Ethanol zugegeben und der Reaktor wird verschlossen. Danach werden 10·10⁵ Pa (0,75 Gew.-Teile) Stickstoff aufgepreßt. Der Reaktorinhalt wird auf eine Temperatur von 150°C aufgeheizt. Dabei steigt der Druck auf ca. 18·10⁵ Pa an. Dann wird der Inhalt des Reaktors durch ein Ventil am Boden in einen Zwischenbehälter entspannt, in dem sich ein Druck von 1,7·10⁵ Pa aufbaut. Durch Nachpressen von Stickstoff wird der Druck im Imprägnierbehälter während der Entspannung bei 25·10⁵ Pa konstant gehalten. Nach der Entfernung des Tricalciumphosphats und Trocknung haben die erhaltenen EPP-Partikel eine Schüttdichte von 146 g/l.

## Patentansprüche

1. Verfahren zur Herstellung von expandierten Polypropylen-(EPP)-Partikeln mit einer Schüttdichte von mindestens 100 g/l durch Imprägnieren von Polypropylen-Granulat in wässriger Suspension in Gegenwart eines wasserunlöslichen Suspendierhilfsmittels bei erhöhter Temperatur und unter einem Druck von 8·10⁵ bis 35·10⁵ Pa und anschließendem Entspannen, **dadurch gekennzeichnet, daß** als Treibmittel 0,1 bis 50 Gew.-%, bezogen auf das Polypropylen-Granulat, Ethanol in Kombination mit 0,5 bis 3 Gew.-%, bezogen auf das Polypropylengranulat Stickstoff, Luft oder Kohlendioxid eingesetzt werden, und daß das Gewichtsverhältnis Wasser zu Ethanol größer als 2 : 1 beträgt.

2. Verfahren zur Herstellung von EPP-Partikeln nach Anspruch 1, **dadurch gekennzeichnet, daß** die expandierten Partikel eine Schüttdichte zwischen 100 und 150 g/l haben.

3. Verfahren zur Herstellung von EPP-Partikeln nach Anspruch 1, **dadurch gekennzeichnet, daß** als Cotreibmittel Stickstoff eingesetzt wird.

4. Verfahren zur Herstellung von EPP-Partikeln nach Anspruch 1, **dadurch gekennzeichnet, daß** man Propylenpolymerisat-Granulat in wäßriger Suspension bei Temperaturen zwischen 110°C und 180°C und einem Druck von 10⁶ bis 25·10⁵ Pa mit dem Treibmittel imprägniert.

5. Verfahren nach Anspruch 1, **dadurch gekennzeichnet, daß** die EPP-Partikel und das Suspendierhilfsmittel von der wäßrigen Lösung, welche die Hauptmenge des Treibmittels gelöst enthält, abgetrennt werden, und die verbleibende wäßrige Lösung als Suspensionsmedium für einen weiteren Imprägnieransatz verwendet wird.

6. Verwendung der nach Anspruch 1 erhaltenen EPP-Partikel zur Herstellung von Schaumstoff-Formteilen.

## Claims

1. A process for producing expanded polypropylene (EPP) particles having a bulk density of at least 100 g/l by impregnation of polypropylene granules in aqueous suspension at elevated temperature and under a pressure in the presence of a water-insoluble suspension aid of from 8 × 10⁵ to 35 × 10⁵ Pa and subsequent depressurization, wherein the blowing agent used is from 0.1 to 50% by weight, based on the polypropylene granules, of ethanol in combination with from 0.5 to 3% by weight, based on the polypropylene granules, of nitrogen, air or carbon dioxide, and the weight ratio of water to ethanol is greater than 2:1.

2. A process for producing EPP particles as claimed in claim 1, wherein the expanded particles have a bulk density of between 100 and 150 g/l.

3. A process for producing EPP particles as claimed in claim 1, wherein nitrogen is used as co-blowing agent.

4. A process for producing EPP particles as claimed in claim 1, wherein propylene polymer granules are impregnated with the blowing agent in aqueous suspension at from 110°C to 180°C and a pressure of from 10⁶ to 25 × 10⁵ Pa.

5. A process as claimed in claim 1, wherein the EPP particles and the suspension aid are separated off from the aqueous solution in which the major part of the blowing agent is present in dissolved form, and the remaining aqueous solution is used as suspension medium for a further impregnation batch.

6. Use of the EPP particles obtained as claimed in claim 1 for producing foam moldings.

## Revendications

1. Procédé de préparation de particules de polypropylène expansé (EPP) ayant une masse volumique apparente d'au moins 100 g/l par imprégnation d'un produit de granulation de polypropylène en suspension aqueuse, en présence d'un agent auxiliaire de suspension insoluble dans l'eau, à une température élevée et sous une pression de 8.10⁵ à 35.10⁵ Pa, et par détente ultérieure, **caractérisé en ce que**, comme agent gonflant, on met en oeuvre 0,1 à 50% en poids d'éthanol par rapport au produit de granulation de polypropylène, en combinaison avec 0,5 à 3% en poids d'azote, d'air ou de dioxyde de carbone, par rapport au produit de granulation de polypropylène, et **en ce que** le rapport pondéral entre l'eau et l'éthanol est supérieur à 2/1.

2. Procédé de préparation de particules d'EPP selon la revendication 1, **caractérisé en ce que** les particules expansées ont une masse volumique apparente comprise entre 100 et 150 g/l.

3. Procédé de préparation de particules d'EPP selon la revendication 1, **caractérisé en ce qu'**on met en oeuvre de l'azote comme coagent gonflant.

4. Procédé de préparation de particules d'EPP selon la revendication 1, **caractérisé en ce qu'**on imprègne d'agent gonflant le produit de granulation de polypropylène en suspension aqueuse, à des températures comprises entre 110°C et 180°C et à une pression de 10⁶ à 25.10⁵ Pa.

5. Procédé salon la revendication 1, **caractérisé en ce qu'**on isole les particules d'EPP et l'agent auxiliaire de suspension de la solution aqueuse qui contient en solution la quantité principale de l'agent gonflant et **en ce qu'**on utilise la solution aqueuse subsistante comme milieu de suspension pour une autre masse d'imprégnation.

6. Utilisation des particules d'EPP obtenues selon la revendication 1, pour la préparation de pièces façonnées en mousse.
